# EUROPÄISCHE PATENTSCHRIFT

(11) **EP 1 738 960 B1**
(45) Veröffentlichungstag und Bekanntmachung des Hinweises auf die Patenterteilung: **12.09.2007**
(21) Anmeldenummer: 06013088.7
(22) Anmeldetag: 26.06.2006
(51) Int. Cl.: B60R 5/04, B60J 1/20

(54) **Ablage bzw. Gehäuse für Kraftfahrzeuge**
Shelf and housing for motor vehicles
Tablette de rangement et boîtier pour véhicules automobiles

(30) Priorität: 30.06.2005 AT 11032005
(43) Veröffentlichungstag der Anmeldung: 03.01.2007
(73) Patentinhaber: Greiner Perfoam GmbH, 4550 Kremsmünster (AT)
(72) Erfinder: Riepl, Roland, Ing., 4400 Steyr (AT)
(74) Vertreter: Secklehner, Günter

(56) Entgegenhaltungen:
- EP-A- 0 926 007
- EP-A- 1 104 709
- DE-A1- 10 307 212
- FR-A- 2 566 722
- FR-A- 2 851 200
- US-A- 5 067 546

## Beschreibung

Die Erfindung betrifft eine Ablage für Kraftfahrzeuge, insbesondere eine Hutablage, mit einer Ausnehmung, in bzw. an der ein Gehäuse für ein Sonnenschutzrollo anordenbar ist, wobei die Ausnehmung zumindest teilweise von zumindest einer Seitenwand begrenzt ist, ein Gehäuse mit einem Innenraum für die Aufnahme eines Sonnenschutzrollos, wobei in dem Gehäuse eine Ausnehmung angeordnet ist, durch die das Sonnenschutzrollo beim Ausrollen hindurchgeführt werden kann, mit gegebenenfalls einer Abdeckung für die Ausnehmung, wobei die Ausnehmung zumindest teilweise von zumindest einer Seitenwand begrenzt und eine Sonnenschutzvorrichtung für Kraftfahrzeuge umfassend ein Gehäuse mit einem Innenraum, in dem ein Sonnenschutzrollo angeordnet ist, wobei in dem Gehäuse eine Ausnehmung für den Durchtritt des Sonnenschutzrollos ausgebildet ist, gegebenenfalls mit einer Ablage, insbesondere einer Hutablage für ein Kraftfahrzeug, die eine Ausnehmung aufweist, an der das Gehäuse angeordnet, insbesondere befestigt, ist, sowie mit einer Abdeckung für die Ausnehmung des Gehäuses oder die Ausnehmung der Ablage, wobei die Ausnehmung des Gehäuses oder der Ablage zumindest teilweise von zumindest einer Seitenwand begrenzt ist, sowie die Verwendung der Ablage, des Gehäuses und der Sonnenschutzvornchtung in einem Kraftfahrzeug.

Als Sonnenschutzeinrichtungen für Kraftfahrzeuge sind aus dem Stand der Technik getönte bzw. mit Löchern versehene Folien bekannt, die von innen auf die Heckscheibe bzw. Seitenscheiben geklebt werden, um einen Sicht- und Sonnenschutz zu ermöglichen. Diese Folien lösen sich meist im Laufe der Zeit zumindest teilweise von der Scheibe ab, und es entstehen größere und kleinere Blasen, die das Aussehen des Sonnen- bzw. Sichtschutzes nachteilig beeinflussen.

Aus dem Stand der Technik sind des weiteren Heckrollos bekannt, die in ihrer Ruhelage auf einem Stab bzw. einer Stange aufgerollt sind, die quer zum Heckfenster, meist in der Höhe der Hutablage, angeordnet und drehbar gelagert ist. Der obere Rand des Heckrollos ist mit einer weiteren Querstange verbunden, die sich von Hand bzw. durch einen Elektromotor aus der unteren Position nach oben aufspannen und in umgekehrter Richtung einrollen lässt.

Aus der US 5,553,908 A ist ein Sonnenschutz bekannt, der aus einem leichten, flexiblen und nicht sehr formstabilen Material besteht und mit Saugnäpfen an der Fahrzeugscheibe befestigt werden kann. Aufgrund der geringen Formstabilität muss der Sonnenschutz bei größeren Scheiben geteilt werden und die Saugnäpfe, die relativ weit vom Rand der Scheibe angebracht sind, können zu Beeinträchtigungen der Sicht führen.

Die meisten Personenkraftwagen haben eine hintere Ablage, über der sich die Heckscheibe befindet. Es ist geläufig lichtdurchlässige Sonnenrollos dort anzubringen, um das durch die Heckscheibe eines Fahrzeugs einfallende Licht zu filtern, wobei die Hersteller das Vorhandensein dieser Ablage nutzen, um das Rollo derart zu befestigen, dass das, das Sonnenrollo aufnehmende Gehäuse unsichtbar ist. Dazu wird in die Ablage ein Schlitz eingebracht, der das Anbringen des Rollogehäuses, welches den Aufrollmechanismus für den Stoff enthält, in der Ablage gestattet, wobei das Rollo selbst durch diesen Schlitz gezogen wird. Dieser Schlitz ist jedoch breit und schwächt somit die mechanische Widerstandsfähigkeit der Ablage, sodass die Gefahr besteht, dass diese im Bereich des Schlitzes zusammenbricht, wenn darauf schwere Gegenstände gelegt werden. Eine derartige Ablage wird in der EP 0 424 327 A2 beschrieben.

Eine Ablage, ein Gehäuse und eine Sonnenschutzvorrichtung nach den Oberbegriffen der Ansprüche 1, 19 und 32 sind aus der EP-A-1 104 709 bekannt.

Die bisher bekannten Sonnenschutzvorrichtungen bzw. eingebauten Sonnenschutzrollos haben den Nachteil, dass sie entweder mit großem Abstand zur Sichtkante der Ausnehmung, durch die das Rollo geführt wird, befestigt sind oder dass die Metallgehäuse nur enge Toleranzen aufweisen und damit nur gerade, ebenflächige Ablagen möglich sind. Die Fahrzeugindustrie verlangt jedoch verstärkt nach Designlösungen dieser Ablagen, also beispielsweise Ablagen mit entsprechend gewölbten Oberflächen, was bisher nur mit den großen Metallgehäusen möglich ist, die entsprechen weit beabstandet von der genannten Sichtkante montiert werden müssen. Damit einhergehend ist aber ein entsprechend großer Montageaufwand durch die zusätzlich erforderlichen Schrauben notwendig.

Aufgabe der Erfindung ist es, eine Vorrichtung zur Verfügung zu stellen, in oder an der ein Sonnenschutzrollo bzw. ein Gehäuse für ein Sonnenschutzrollo befestigt werden kann, und die dabei die mechanische Festigkeit zumindest annähernd beibehält. Teilaufgabe der Erfindung ist es auch, ein einfaches Abdecken des Gehäuses für das Sonnenschutzrollo zu ermöglichen.

Die Aufgabe der Erfindung wird jeweils eigenständig gelöst durch die eingangs genannte Ablage für Kraftfahrzeuge sowie das eingangs genannte Gehäuse, deren Seitenwand der Ausnehmung zumindest zwei- oder mehrstufig ausgebildet ist, und eine Sonnenschutzvorrichtung, die ebenfalls eine zwei- oder mehrstufige Seitenwand zeigt.

Die zumindest zweistufige Ausbildung der Seitenwand ermöglicht eine erhöhte Formstabilität jener Vorrichtung, in der die Ausnehmung mit der zweistufigen Seitenwand angeordnet ist. Vorteilhaft erweist sich des weiteren, dass durch die Zweistufigkeit eine Zentrierung von Gegenständen, wie z.B. einer Abdeckung, welche an oder in der Ausnehmung angeordnet sind oder diese passieren müssen, erfolgen kann. Durch die mehrstufige Ausbildung der Seitenwand kann auch zumindest eine Stufe zur Anordnung eines weiteren Gegenstandes, wie z.B. eines Dämpfungselementes oder Verriegelungselementes, verwendet werden. In die zweite Stufe kann darüber hinaus das Gehäuse, in dem das Sonnenschutzrollo angeordnet ist, einfach eingeklipst werden, wodurch sich der Montageaufwand für die Anordnung des Gehäuses an der Ablage entsprechend verringern lässt. Des weiteren wird es mit der erfindungsgemäßen Mehrstufigkeit möglich, dass die Befestigungsbereiche für das Gehäuse durch die Abdeckung im geschlossenen Zustand verdeckt werden, ohne dass die Abdeckung über die Oberfläche der Ablage vorragt. Zudem ermöglicht die Mehrstufigkeit die Ausbildung bombierter Oberflächen bei gerade Montagekante.

Vorteilhaft erweist sich auch, wenn die Ausnehmung der Ablage annähernd normal zur Längsachse des Kraftfahrzeuges angeordnet ist, wodurch eine Beschattung bzw. ein Sichtschutz für die Front- und die Heckscheibe des Kraftfahrzeuges möglich ist.

In einer alternativen Ausführungsform kann die Ausnehmung der Ablage, wobei unter Ablage im weitesten Sinn auch die Seitenverkleidung einer Kraftfahrzeugtür verstanden werden kann, auch zumindest annähernd parallel zur Längsachse des Kraftfahrzeugs angeordnet sein, wodurch eine Beschattung bzw. ein Sichtschutz für die Seitenscheiben des Kraftfahrzeuges möglich ist.

Durch die längliche, insbesondere recheckige oder ellipsenförmige, Ausbildung der Ausnehmung ist es möglich, diese so klein wie notwendig in ihren Abmessungen auszugestalten.

Dabei ist von Vorteil, dass einerseits im Fahrzeuginnenraum vorkommender Staub oder Schmutz kaum durch die geringen Abmessungen der Ausnehmung zum Sonnenschutzrollo gelangen kann und andererseits die Stabilität der Ablage erhalten bleibt, wenn beispielsweise Gegenstände darauf platziert werden.

In einer Weiterbildung ist vorgesehen, dass zumindest zwei einander gegenüberliegende, die Ausnehmung begrenzende Seitenwände zwei- oder mehrstufig ausgebildet sind, wodurch eine Zentrierung einer eventuell anzuordnenden Abdeckung für die Ausnehmung der Ablage in dieser ermöglicht wird, sodass keine besonderen weiteren Führungsmittel für diese Zentrierung erforderlich sind. Durch die Mehrstufigkeit kann dabei auch eine plane Oberfläche der Ablage auch im Bereich der Abdeckung hergestellt werden, wodurch sich die Abdeckung nicht störend als vorstehender Gegenstand auswirkt.

Im Gehäuse kann eine Öffnung zum Austritt des Sonnenschutzrollos vorhanden sein, durch die das Sonnenschutzrollo aus einem Innenraum des Gehäuses zur Ermöglichung des Sicht- bzw. Sonnenschutzes abgerollt werden kann, wobei die Ausnehmung der Ablage eine geringere Abmessung als die Öffnung des Gehäuses aufweisen kann, wodurch das Gehäuse beispielsweise aufgrund seiner eigenen Spannkraft mit der Öffnung in der Ausnehmung der Ablage befestigt werden kann und dadurch das Gehäuse an bzw. in der Ablage gehalten wird. Zudem erweist sich dabei als vorteilhaft, dass ohne Anordnung zusätzlicher Vorrichtungen und somit kostengünstig eine Halterung des Gehäuses an der Ablage möglich ist.

Alle Stufen der Seitenwände können die gleichen Abmessungen aufweisen, wodurch eine einfache, standardisierte und somit kostengünstige Produktion der Ablage möglich ist.

Die Ablage kann im Bereich der Ausnehmung und/oder zumindest eine Stufe zumindest einer Seitenwand kann bombiert ausgeführt ist, wodurch die Gleitfähigkeit des Sonnenrollos in der Ausnehmung und das Einfügen der Abdeckung in die Ausnehmung erleichtert wird.

In einer Weiterbildung der Ablage ist vorgesehen, dass zumindest eine Stufe der Seitenwand ein Befestigungsmittel zum Einhängen des Gehäuses aufweist, wodurch eine Verbindung der Ablage mit dem Gehäuse über das Befestigungsmittel möglich ist. Dabei erweist sich von Vorteil, dass jegliche Art eines Gehäuses mit jeglicher Art einer Ablage verbunden werden kann, weil die Verbindung vom Befestigungsmittel übernommen wird und unabhängig von der Ausführungsart der Ablage bzw. des Gehäuses ist.

Ebenfalls in einer Weiterbildung der Ablage ist in dieser eine Abdeckung für die Ausnehmung angeordnet, wodurch einerseits eine plane Oberfläche der Ablage erzielt wird und anderseits das Eindringen von Staub in den Bereich des Gehäuses, in welchem das Sonnenrollo im aufbewahrten Zustand gelagert wird, verhindert werden kann.

Die Abdeckung kann zumindest annähernd im Querschnitt betrachtet T-förmig ausgebildet sein, wobei gemäß einer Weiterbildung der Querschnitt der Abdeckung zumindest annähernd komplementär zum Querschnitt der Seitenwand bzw. Seitenwände zumindest bis in der Bereich der in Einbaulage betrachtet obersten Stufe der Ausnehmung ausgebildet sein kann, wodurch ein optimaler Verschluss des Gehäuses erzielt werden kann. Zudem kann von einer Stufe die Aufgabe der Zentrierung der Abdeckung in der Ausnehmung übernommen werden und dadurch eine sehr einfache Bedienung der Ablage möglich sein.

Ebenfalls von Vorteil erweist sich, wenn die Abdeckung der Ausnehmung im geschlossenen Zustand bündig mit der Oberseite der Ablage ist, wodurch eine plane Oberfläche entsteht und diese besser zur Ablage diverser Gegenstände geeignet ist. Zudem wird der Ablage damit ein gefälligeres Aussehen verliehen, wodurch die Verkaufbarkeit derselben gesteigert werden kann.

In einer Weiterbildung ist vorgesehen, dass in der zwei- oder mehrstufigen Seitenwand zumindest ein Dämpfungselement für die Aufnahme der Abdeckung angeordnet ist, wodurch ein sanftes Ineinanderfügen der Abdeckung in die Ausnehmung ermöglicht wird.

In einer alternativen Ausführungsform kann die Ablage auch im Bereich der Frontscheibe angeordnet sein, beispielsweise in dem diese zumindest einen Teil des Armaturenbretts bildet, bzw. kann die Ablage auch als Himmel für ein Kraftfahrzeug ausgebildet sein, wobei analog zur Anordnung der Ablage im Bereich der Heckscheibe die Ausnehmung ebenfalls zweistufig ausgebildet ist und das Sonnenschutzrollo bzw. der Sichtschutz im Armaturenbrett versenkt werden kann und beispielsweise das Kraftfahrzeug im geparkten Zustand vor einer Überhitzung des Innenraums zu schützen.

Nach einer Weiterbildung ist vorgesehen, dass ein Randbereich Gehäuses im Bereich der Öffnung nach innen, bevorzugt um zumindest annähernd 180 °, umgebogen ist, sodass dieses einfach in eine Stufe der Seitenwand eingehängt bzw. eingeklipst werden kann, ohne dass die Gefahr einer Beschädigung der Ablage durch scharfe Kanten besteht.

Sowohl die Stufen der Ausnehmung der Ablage als auch jener des Gehäuses können über den gesamten Umfang der Ausnehmung umlaufend und ohne Unterbrechung ausgebildet sein, sodass zum einen eine große Auflagefläche für eine Abdeckung und zum anderen eine große Fläche für die Anordnung des Gehäuses an der Ablage zur Verfügung steht.

Von Vorteil erweist sich, dass gemäß einer Weiterbildung des Gehäuses dieses elastisch verformbar ist, wodurch im Bereich der Öffnung des Gehäuses eine Änderung des Querschnitts des Gehäuses ermöglicht wird und dieser verkleinert werden kann und dadurch in die Ausnehmung der Ablage eingehängt, insbesondere eingeklipst, werden kann und durch die Spannkraft selbsttätig gehalten wird, sodass also auf eine zusätzliche Befestigung des Gehäuses verzichtet werden kann.

Die Ausnehmung kann annähernd parallel zur Längsachse des Gehäuses angeordnet sein, wodurch die Entfaltung des Sonnenrollos über eine möglichst große Fläche erfolgen kann.

Die Ausnehmung im Gehäuse ist vorzugsweise länglich, insbesondere rechteckig oder ellipsenförmig ausgebildet, wodurch neben der Formstabilität auch eine formschöne Ausgestaltung möglich ist.

Durch die zwei- oder mehrstufige Ausbildung von zumindest zwei einander gegenüberliegenden, die Ausnehmung begrenzenden, Seitewänden wird ermöglicht, dass das Gehäuse eine hohe Formstabilität aufweist. Vorteilhaft dabei erweist sich auch, dass eine Zentrierung der Abdeckung über zumindest eine Stufe erzielt werden kann.

Durch die Ausführung der Stufen der Seitenwände mit gleichen Abmessungen wird eine standardisierte und kostengünstige Produktion ermöglicht.

Eine Abdeckung für die Ausnehmung gewährleistet eine mehr oder minder staubfreie Aufbewahrung des Sonnenrollos im Gehäuse.

Die Ausbildung des Querschnitts der Abdeckung komplementär zur zwei- oder mehrstufigen Seitenwand ermöglicht eine exakte Passform der Abdeckung in der Ausnehmung des Gehäuses.

In einer Weiterbildung ist vorgesehen, dass die Abdeckung der Ausnehmung im geschlossenen Zustand bündig mit der Oberseite des Gehäuses ist, wodurch eine plane Fläche hergestellt wird, die formschön gestaltet werden kann und zur Ablage von Gegenständen verwendet werden kann.

In der zwei- oder mehrstufigen Seitenwand kann in einer Weiterbildung des Gehäuses zumindest ein Dämpfungselement für die Aufnahme der Abdeckung angeordnet sein, wodurch eine sanfte Bewegung der Abdeckung gegen das Gehäuse bzw. eine sanfte Schließbewegung ermöglicht wird.

In einer Weiterbildung des Gehäuses kann im Bereich der Ausnehmung eine Verjüngung vorgesehen sein, wodurch eine vereinfachte Anordnung des Gehäuses in einer Ausnehmung einer anderen Vorrichtung ermöglicht wird.

Zudem können Befestigungsmittel zur Montage am Gehäuse angeordnet sein, wodurch eine beliebige Befestigung des Gehäuses an anderen Vorrichtungen unabhängig von deren Ausführung ermöglicht wird.

Die Erfindung wird im nachfolgenden anhand des in der Zeichnung dargestellten Ausführungsbeispiels näher erläutert.

Es zeigt in stark schematisch vereinfachter Darstellung:

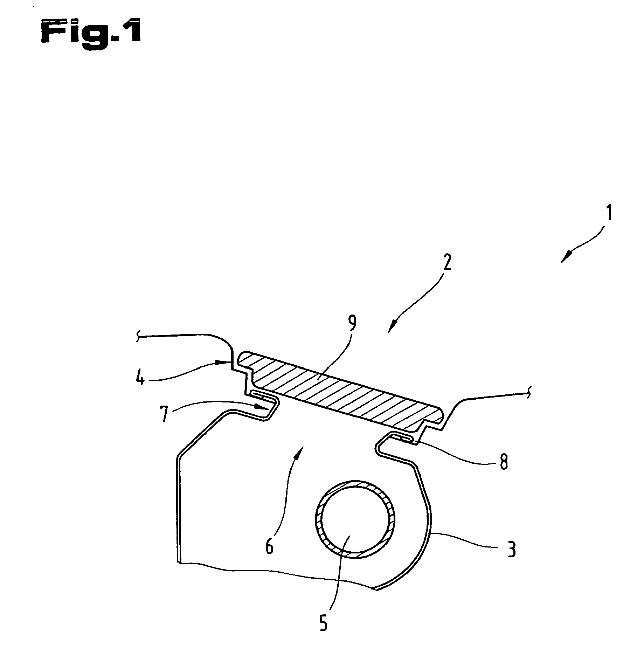

- Fig. 1: einen Schnitt durch eine Ablage mit Gehäuse und Abdeckung.

Einführend sei festgehalten, dass die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen sind.

Fig. 1 zeigt eine Ablage 1, insbesondere eine Hutablage, für ein Kraftfahrzeug. Die Ablage 1 weist eine Ausnehmung 2 bzw. einen Durchbruch auf, die bzw. der in der Oberseite der Ablage 1 angeordnet ist. Durch die Ausnehmung 2 bzw. den Durchbruch kann ein Sonnenschutzrollo 5 aus einer aufgerollten in eine ausgerollte Stellung verbracht werden.

Mit Oberseite der Ablage 1 ist jene Seite bzw. Oberfläche gemeint, die in Einbaulage der Ablage 1 normalerweise sichtbar ist.

Insbesondere als Ausbildung "Hutablage" bzw. generell Ablage für ein Kraftfahrzeug kann die Ablage 1 an dieser Oberseite eine Deck- bzw. Dekorschicht aufweisen, wie beispielsweise eine Filz-, Vlies-, Wirkware-, (Kunst)Lederschicht, etc., wie dies aus dem Stand der Technik bereits bekannt ist. Die Hutablage bzw. Ablage 1 kann aus verschiedensten Werkstoffen gebildet sein, wie z.B. einem verpressten Verbundschaum oder aus faserhältigen Kunstharzmaterialien, wie diese im Fahrzeugbau für die Innenausstattung bekannt sind. Da diese Ausbildungen und Aufbaue bereits bekannt sind, sei der Fachmann an dieser Stelle auf die einschlägige Literatur verwiesen.

In einer alternativen Ausführungsform ist es auch möglich die Ausnehmung 2 in einer zwei-oder mehrteiligen Ablage 1 anzuordnen. Beispielsweise kann eine erste Ablage 1 die eine Hälfte der Ausnehmung 2 bilden und eine zweite Ablage 1 die weitere Hälfte der Ausnehmung 2. Wie bereits erwähnt kann die Ablage 1 aber aus mehr als zwei Teilen gebildet sein.

Generell kann die Ablage 1 einen mehrschichtigen Aufbau aufweisen.

Nicht dargestellt ist die Ausführungsvariante eines Gehäuses 3, bei welcher die Ausnehmung 2 des Gehäuses 3 ebenfalls zwei- oder mehrstufig ausgebildet sein kann. Diese Ausführungsform des Gehäuses 3 kann unabhängig von der Anordnung des Gehäuses 3 in der Ablage 1 eingesetzt werden. Das Sonnenrollo 5 kann im Gehäuse 3 angeordnet sein und durch die Ausnehmung 2 durchtreten.

Die Ausnehmung 2 der Ablage 1 und/oder des Gehäuse 3 ist durch zumindest eine Seitenwand 4 begrenzt, wobei die Seitenwand 4 zwei- oder mehrstufig ausgebildet ist.

In einer Ausführungsvariante der Erfindung ist die Ausnehmung 2, d.h. der Durchbruch, zumindest annähernd rechteckig ausgeführt (in Draufsicht gesehen). In diesem Fall sind vorzugsweise alle vier Seitenwände 4 mehrstufig ausgebildet und besonders bevorzugt die Stufen umlaufend, d.h. ohne Unterbrechung, ausgebildet, wobei dies jedoch nicht zwingend ist, sodass also einzelne Stufen, beispielsweise wenn diese eine geringe Länge aufweisen, auch über den Umfang der Ausnehmung 2 verteilt angeordnet werden können. Auch Mischvarianten hiervon sind möglich.

In einer bevorzugten Ausführungsvariante weist die Ausnehmung 2 vier Seitenwände 4 auf, wobei jeweils zwei Seitenwände 4 einander gegenüberliegen und alle Seitenwände 4 von der Ablage 1 und/oder dem Gehäuse 3 gebildet werden. Bei einer Ausführungsvariante ist zumindest eine Seitenwand 4 durch die Ablage 1 und/oder das Gehäuse 3 gebildet, wohingegen die anderen Seitenwände 4 beispielsweise auch durch weitere Fahrzeugteile gebildet werden können.

In der erfindungsgemäßen Ausführungsform der Ablage 1 bzw. des Gehäuse 3 sind zumindest jeweils zwei einander gegenüberliegende Seitenwände 4 zwei- oder mehrstufig ausgebildet.

In der Ausnehmung 2 der Ablage 1 kann zumindest ein Teil eines Gehäuse 3 angeordnet werden. Im Gehäuse 3 ist ein Sonnenrollo 5 angeordnet, welches durch eine Öffnung 6 aus dem Gehäuse 3 austreten kann. Das Sonnenschutzrollo 5 ist aus z.B. aus einem aufrollbaren Material, vorzugsweise einem textilen Material, hergestellt, kann aber ebenso als Sonnenschutz generell, also beispielsweise als Jalousie ausgebildet sein.

Das Gehäuse 3 ist an der Unterseite der Ablage 1 angeordnet bzw. anordenbar, wobei sich ein Teil desselben, wie dies weiter unten noch näher beschrieben wird, in die Ausnehmung 2 erstreckt.

In einer bevorzugten Ausführungsform der Erfindung liegt eine Ablage 1 mit zumindest einer Seitenwand 4 in zwei- oder mehrstufiger Form in Kombination mit einem Gehäuse 3 ohne mehrstufige Seitenwand 4 vor.

Ist die Ablage 1 im Bereich der Heck- bzw. der Frontscheibe eines Kraftfahrzeuges angeordnet, so wird die Ausnehmung 2 annähernd normal zur Längsachse des Kraftfahrzeuges ausgerichtet sein. Werden kleinere Ablagen 1 im Bereich der Seitenfenster eines Kraftfahrzeuges angeordnet, so kann die Ausnehmung 2 der kleineren Ablagen 1 auch parallel zur Längsachse des Kraftfahrzeuges angeordnet werden.

In Draufsicht zeigt sich die Ausnehmung 2 der Ablage 1 und/oder des Gehäuses 3 in längs gestreckter Form, vorzugsweise rechteckig oder flach ellipsenförmig bzw. oval.

Selbstverständlich sind auch andere Querschnittsformen der Ausnehmung 2 möglich und vom Schutzumfang der Erfindung mit umfasst.

Wie in Fig. 1 gezeigt, sind zumindest zwei einander gegenüberliegende, die Ausnehmung 2 begrenzende Seitenwände 4 zwei- oder mehrstufig ausgebildet, wodurch eine höhere Formstabilität der Ablage 1 erzielt werden kann.

Die mehrstufige Ausbildung der Seitenwand 4 kann wie eine herkömmlich ausgebildete Stufe geformt sein, indem die beiden die Stufe bildenden Flächen in einem Winkel von zumindest annähernd 90 ° zueinander angeordnet sind. In alternativen Ausführungsformen ist es auch möglich die beiden Flächen der Stufen in einem spitzen oder stumpfen Winkel zueinander anzuordnen. Als weitere Ausführungsvariante ist eine annähernd C- bzw. U-förmige Ausbildung der Stufe möglich. Weiters ist es auch möglich die beiden Flächen derart anzuordnen, dass sich eine Hinterschneidung ergibt. Die Stufe kann auch von mehreren Flächen gebildet werden, wodurch sich beispielsweise eine nutförmige Ausbildung der mehrstufigen Ausführung bilden lässt. Letztere kann z.B. dazu herangezogen werden, um ein Abdeckelement, wie dies weiter unten noch näher beschrieben wird, darin in der geschlossenen Stellung zu verriegeln. Diese Nut kann aber auch dazu verwendet werden, um darin zumindest teilweise zumindest ein Dämpfungselement oder Befestigungselement anzuordnen.

Die Ausnehmung 2 der Ablage 1 weist bevorzugt eine geringere Abmessungen, insbesondere Breite, als die Öffnung 6 des Gehäuses 3 auf, wodurch es möglich wird, wenn das Gehäuse elastisch verformbar ausgeführt ist, dass dieses in die, in Einbaulage untere Stufe der Ausnehmung 2 eingehängt wird, wozu das Gehäuse im Bereich der Öffnung 6 zusammengedrückt wird und nach Wegfall dieser Kraft durch die Rückstellkraft aufgrund der elastischen Verformbarkeit in seine ursprüngliche Stellung zurückgehrt und somit gegen die Ausnehmung 2, d.h. deren Seitenwände 4, drückt und kraftschlüssig gehalten wird. Durch dieses selbsttätige Halten des Gehäuses 3 in der Ausnehmung 2 der Ablage 1 kann auf weitere Befestigungsmittel verzichtet werden.

Die elastische Verformbarkeit kann beispielsweise dadurch erreicht werden, indem dieses Gehäuse 3 dünnwandig, z.B. einem dünnen Blech, ausgeführt ist.

Das Gehäuse 3 kann zur Aufnahme in der Ausnehmung 2 der Ablage 1 im Querschnitt betrachtet eine nutartige Verjüngung 7 im Bereich der Öffnung 6 aufweisen.

Alternativ zur selbsttätigen Halterung des Gehäuses 3 in der Ausnehmung 2 der Ablage 1, kann das Gehäuse 3 auch durch Befestigungsmittel, welche an einer Stufe der Seitenwand 4 der Ausnehmung 2 der Ablage 1 befestigt sind, angeordnet werden. Das Befestigungsmittel kann beispielsweise in Form eines Widerhakens, eines Druckknopfs, eines Fortsatzes oder dgl. ausgebildet sein.

Zudem kann das Gehäuse 3 Elemente 8 zum Einhängen bzw. Einklipsen in die Ausnehmung 2 der Ablage 1 aufweisen. Die Elemente 8 werden vorzugsweise mit lediglich einer Stufe der Seitenwand 4 der Ausnehmung 2 der Ablage 1 in Verbindung bzw. in Kontakt verbracht. Ein derartiges Element 8 kann beispielsweise durch einen Falzbereich, in dem z.B. eine Randbereich des Bleches nach innen gefaltet wird, hergestellt werden. Bevorzugt sind das bzw. die Element(e) 8 einstückig aus dem Gehäuse gebildet.

Die zumindest eine andere Stufe in der Seitenwand 4 der Ausnehmung 2 der Ablage 1 kann der Zentrierung des Sonnenrollos 5 bzw. einer Abdeckung 9, welche zum Abdecken der Ausnehmung 2 angeordnet sein kann, dienen.

Um ein optimales Abdecken zu erreichen, ist die Abdeckung 9 komplementär zur zwei- oder mehrstufigen Seitenwand 4 ausgebildet, d.h. das der Querschnitt der Abdeckung 9 an den stufenförmigen Querschnitt der Seitenwände 4 angepasst ist. Ein unterer Rand der Abdeckung 9 kann dabei auf dem bzw. den Element(en) 8 des eingehängten Gehäuses 3 aufliegen.

Ist die Seitenwand 4 dreistufig bzw. mehrstufig ausgebildet, so kann auch die Abdeckung 9 dreistufig oder mehrstufig ausgebildet sein.

In einer bevorzugten Ausführungsvariante fügt sich die Abdeckung 9 in die Ausnehmung 2 der Ablage 1 derart ein, dass die Oberfläche der Abdeckung 9 und die Oberflächen der Ablage 1 zumindest annähernd bündig schließen. Es entsteht dadurch eine plane Oberfläche, wobei diese plane Oberfläche durchaus Wölbungen, etc. neben der Ausnehmung 2 aufweisen kann. Mit anderen Worten bedeutet der Ausdruck "plan" im Sinne der Erfindung nicht zwangsweise, dass die Abdeckung 9 ebenflächig ausgebildet ist, sondern nur, dass die Abdeckung 9 nicht aus der Ausnehmung 2 im verschlossenen Zustand herausragt.

An einer Stufe der Seitenwand 4 der Ablage 1 und/oder des Gehäuses 3 kann zumindest ein Dämpfungselement für die Aufnahme der Abdeckung 9 angeordnet sein. Es können hierbei Dämpfer unterschiedlicher Bauart verwendet werden, wie z.B. ein Silikondämpfer, federelastische Stifte, oder dgl.

Die Ablage 1 kann sowohl im Heckscheibenbereich als auch im Frontscheibenbereich, vorzugsweise unterhalb der Fensterscheibe angeordnet sein. Das Sonnenrollo 5 wird dabei in seiner offenen Funktionsstellung aus dem Gehäuse 3 ausgerollt und parallel zur Fensterscheibe gespannt. Es kann auch in etwa in einem rechten Winkel zur Ablage 1 und/oder Gehäuse 3 stehen und verhindert eine übermäßige Sonneneinstrahlung durch die Heck- bzw. Frontscheibe des Fahrzeuges in den Fahrgastraum.

Das Gehäuse 3, das in der Ausnehmung 2 der Ablage 1 angeordnet sein kann, und in welchem sich das Sonnenrollo 5 befindet, kann elastisch verformbar ausgebildet sein. Dies kann beispielsweise durch die Verwendung bestimmter formelastischer Materialien erzielt werden.

Das Gehäuse 3 weist eine Öffnung 6 zum Austritt des Sonnenrollos 5 auf. Um ein Einhängen des Gehäuses 3 in die Ausnehmung 2 der Ablage 1 zu ermöglichen, wird dieses im Bereich der Öffnung 6 im Querschnitt verkleinert und dadurch in die Ausnehmung 2 der Ablage 1 gedrückt bzw. eingehängt.

Das Gehäuse 3 weist im Bereich der Öffnung 6 Elemente 8 auf, die das Einhängen des Gehäuses 3 in die Ausnehmung 2 der Ablage 1 erleichtern. Diese Elemente 8 können sehr einfach ausgestaltet sein, wie z.B. durch die Anordnung eines Teils der Seitenwand 4 im Winkel von 90° zur Seitenwand 4 des Gehäuses 3 oder es können auch Elemente 8 in Form eines Widerhakens oder Druckknopfs ausgebildet sein. Sind die Elemente 8 am Gehäuse 3 derart ausgebildet, so ist auch das Gegenstück an der Seitenwand 4 der Ausnehmung 2 der Ablage 1 komplementär dazu ausgebildet.

Liegt das Gehäuse 3 eigenständig, also ohne Ablage 1 vor, weist es ebenfalls eine Ausnehmung 2 auf und ist zumindest teilweise von einer Seitenwand 4 begrenzt, wobei die Seitenwand 4 zwei- oder mehrstufig ausgebildet ist. Die Ausnehmung 2 ist vorzugsweise länglich, insbesondere rechteckig oder oval.

Das Gehäuse 3 kann mit einer Abdeckung 9 versehen sein, wobei die Abdeckung 9 und die Oberfläche des Gehäuses 3 im geschlossenen Zustand bündig abschließen können.

Durch die mehrstufige Ausbildung der Ausnehmung 2 wird einerseits eine Zentrierung der Abdeckung 9 erzielt und andererseits die Formstabilität verbessert. Die Ausnehmung 2 des Gehäuses 3 ist annähernd parallel zur Längsachse des Gehäuses 3 angeordnet. Das Sonnenschutzrollo 5 ist im Gehäuse 3 angeordnet.

Die Ausnehmung 2 ist durch zumindest zwei einander gegenüberliegende Seitenwände 4 begrenzt. Durch das Gegenüberliegen der beiden zwei- oder mehrstufigen Seitenwände 4 wird die Zentrierung der Abdeckung 9 ermöglicht.

Wie bereits vorab beschrieben, besitzt das Gehäuse 3 eine Öffnung 6 zum Austritt des Sonnenschutzrollos 5.

In einer bevorzugten Ausführungsform weist die Ausnehmung 2 größere Abmessungen als die Öffnung 6 des Gehäuses 3 auf, wodurch ein Einklipsen bzw. eine Halterung des Gehäuses 3 in der Ausnehmung 2 der Ablage 1 über Spannkraft erzielt werden kann.

Werden andere Befestigungsmittel verwendet, können die Abmessungen der Öffnung 6 des Gehäuses 3 und der Ausnehmung 2 der Ablage 1 annähernd gleich bzw. die Öffnung 6 des Gehäuses 3 kleiner als die Ausnehmung 2 der Ablage 1 sein.

Um eine kostengünstige Fertigung der Seitenwände 4 bzw. des Gehäuses 3 zu ermöglichen, können die Stufen der Seitenwände 4 mit gleichen Abmessungen hergestellt werden. Die beiden die Stufen bildenden Flächen können im rechten Winkel, in einem stumpfen oder spitzen Winkel zueinander oder annähernd C- oder U-förmig ausgebildet sein. Auch eine Hinterschneidung bzw. eine nutförmige Ausgestaltung wie bei der Ablage 1 beschrieben ist für die zwei- oder mehrstufige Ausbildung der Stufen des Gehäuses 3 möglich.

In einer alternativen Ausführungsform ist es möglich die Stufen in ihrer Breite mit den gleichen Abmessungen auszubilden, aber in ihrer Höhe zu variieren, um an die erforderlichen Gegebenheiten anpassen zu können.

Um ein Ineinanderfügen der Abdeckung 9 in das Gehäuse 3 durch eine sanfte Bewegung ausführen zu ermöglichen, kann in der zwei- oder mehrstufigen Seitenwand 4 ein Dämpfungselement angeordnet sein. Wie bereits vorab erwähnt, kann dieses als Silikondämpfer, als pneumatischer Dämpfer, oder dgl. ausgeführt sein.

Das Gehäuse 3 kann im Bereich der Öffnung 6 eine Verjüngung 7 des Querschnittes aufweisen, um die Verbindung bzw. das Ineinanderfügen mit der Ausnehmung 2 der Ablage 1 zu erleichtern.

Alternativ bzw. zusätzlich zur Verjüngung 7 kann das Gehäuse 3 im Bereich jener Teile, die mit der Ausnehmung 2 der Ablage 1 interagieren, Befestigungsmittel aufweisen. Die Befestigungsmittel sind vorzugsweise als ein in Winkel von 90° abstehendes Profil von der Seitenwand 4 des Gehäuses 3, als Widerhaken, als Druckknopf oder dgl. ausgeführt.

Das erfindungsgemäße Gehäuse 3 bzw. die erfindungsgemäße Ablage 1 können in Kombination mit einem Sonnenschutzrollo 5 als Sonnenschutzvorrichtung für Kraftfahrzeuge verwendet werden.

Die Sonnenschutzvorrichtung umfasst eine Ausnehmung 2 für ein Sonnenschutzrollo 5 bzw. zum Einhängen eines Gehäuses 3 und einer Abdeckung 9 für die Ausnehmung 2 des Gehäuses 3 oder der Ausnehmung 2 der Ablage 1, wobei die Ausnehmung 2 jeweils zumindest teilweise von zumindest einer Seitenwand 4 begrenzt ist und diese Seitenwand 4 zwei- oder mehrstufig ausgebildet ist.

Neben der Verwendung der Ablage 1 bzw. des Gehäuses 3 in Kombination mit Sonnenschutzvorrichtungen als Sonnenschutz können die erfindungsgemäßen Vorrichtungen auch als Sichtschutz verwendet werden.

Obwohl die Erfindung nur im Zusammenhang mit einer Sonnenschutzvorrichtung bzw. einem Sonnenschutzrollo beschrieben wurde, ist es selbstverständlich möglich, dass das Gehäuse auch zur Anordnung von anderen Gegenständen in einer Ablage 1 verwendet wird.

Das Ausführungsbeispiel zeigt eine mögliche Ausführungsvariante der Ablage 1 bzw. des Gehäuses 3 und der Sonnenschutzvorrichtung, wobei an dieser Stelle bemerkt sei, dass die Erfindung nicht auf die speziell dargestellte Ausführungsvariante derselben eingeschränkt ist.

In der Fig. 1 ist eine für sich eigenständige Ausführungsform der Ablage 1 gezeigt, wobei für gleiche Teile gleiche Bezugszeichen bzw. Bauteilbezeichnungen verwendet werden. Um unnötige Wiederholungen zu vermeiden, wird auf die detaillierte Beschreibung hingewiesen bzw. Bezug genommen.

Der Ordnung halber sei abschließend darauf hingewiesen, dass zum besseren Verständnis des Aufbaus der Ablage 1, des Gehäuses 3 und der Sonnenschutzvorrichtung diese bzw. deren Bestandteile teilweise unmaßstäblich und/oder vergrößert und/oder verkleinert dargestellt wurden.

### Bezugszeichenaufstellung

- 1: Ablage
- 2: Ausnehmung
- 3: Gehäuse
- 4: Seitenwand
- 5: Sonnenschutzrollo

- 6: Öffnung
- 7: Verjüngung
- 8: Element
- 9: Abdeckung

## Patentansprüche

1. Ablage (1) für Kraftfahrzeuge, insbesondere Hutablage, mit einer Ausnehmung (2), in bzw. an der ein Gehäuse (3) für ein Sonnenschutzrollo (5) anordenbar ist, wobei die Ausnehmung (2) zumindest teilweise von zumindest einer Seitenwand (4) begrenzt ist, **dadurch gekennzeichnet, dass** die zumindest eine Seitenwand (4), vorzugsweise vier Seitenwände (4), zwei- oder mehrstufig ausgebildet ist.

2. Ablage (1) nach Anspruch 1, **dadurch gekennzeichnet, dass** die Ausnehmung (2) annähernd normal zur Längsachse des Kraftfahrzeugs angeordnet ist.

3. Ablage (1) nach Anspruch 1, **dadurch gekennzeichnet, dass** die Ausnehmung (2) annähernd parallel zur Längsachse des Kraftfahrzeugs angeordnet ist.

4. Ablage (1) nach einem der vorhergehenden Ansprüche, **dadurch gekennzeichnet, dass** die Ausnehmung (2) eine Länge aufweist, die größer ist als eine Breite, insbesondere rechteckig oder ellipsenförmig ist.

5. Ablage (1) nach einem der vorhergehenden Ansprüche, **dadurch gekennzeichnet, dass** die Ausnehmung (2) zumindest zwei einander gegenüberliegende Seitenwände (4) aufweist, die zwei- oder mehrstufig ausgebildet sind.

6. Ablage (1) nach einem der vorhergehenden Ansprüche, **dadurch gekennzeichnet, dass** das Gehäuse (3) eine Öffnung (6) zum Austritt des Sonnenschutzrollos (5) aufweist, wobei die Ausnehmung (2) geringere Abmessungen als die Öffnung (6) des Gehäuses (3) aufweist.

7. Ablage (1) nach einem der vorhergehenden Ansprüche, **dadurch gekennzeichnet, dass** die Seitenwände (4) mit zumindest annähernd zueinander identischen Abmessungen der Stufen ausgebildet sind.

8. Ablage (1) nach einem der vorhergehenden Ansprüche, **dadurch gekennzeichnet, dass** diese im Bereich der Ausnehmung (2) und/oder zumindest eine Stufe zumindest einer Seitenwand (4) bombiert ausgeführt ist.

9. Ablage (1) nach einem der vorhergehenden Ansprüche, **dadurch gekennzeichnet, dass** zumindest eine Stufe zumindest einer Seitenwand (4) ein Befestigungsmittel zum Einhängen des Gehäuses (3) aufweist.

10. Ablage (1) nach einem der vorhergehenden Ansprüche, **dadurch gekennzeichnet, dass** auf zumindest einer der Stufen, vorzugsweise der in Einbaulauge betrachtet obersten Stufe, eine Abdeckung (9) für die Ausnehmung angeordnet ist.

11. Ablage (1) nach Anspruch 10, **dadurch gekennzeichnet, dass** die Abdeckung (9) im Querschnitt betrachtet zumindest annähernd T-förmig ausgebildet ist.

12. Ablage (1) nach Anspruch 10 oder 11, **dadurch gekennzeichnet, dass** der Querschnitt der Abdeckung (9) zumindest annähernd komplementär zum Querschnitt der Seitenwand (4) bzw. Seitenwände (4) zumindest bis in den Bereich der in Einbaulage betrachtet obersten Stufe der Ausnehmung (2) ausgebildet ist.

13. Ablage (1) nach einem der Ansprüche 10 bis 12, **dadurch gekennzeichnet, dass**, in Einbaulage betrachtet, die Abdeckung (9) der Ausnehmung im geschlossenen Zustand bündig mit einer Oberseite der Ablage (1) angeordnet ist.

14. Ablage (1) nach einem der vorhergehenden Ansprüche, **dadurch gekennzeichnet, dass** in bzw. an zumindest einer der zwei- oder mehrstufigen Seitenwände (4) zumindest ein Dämpfungselement für die Schließbewegung der Abdeckung (9) angeordnet ist.

15. Ablage (1) nach einem der vorhergehenden Ansprüche, **dadurch gekennzeichnet, dass** diese zumindest teilweise als Armaturenbrett für ein Kraftfahrzeug ausgebildet ist.

16. Ablage (1) nach einem der Ansprüche 1 bis 14, **dadurch gekennzeichnet, dass** diese zumindest teilweise als Himmel für ein Kraftfahrzeug ausgebildet ist.

17. Ablage (1) nach einem der vorhergehenden Ansprüche, **dadurch gekennzeichnet, dass** ein Randbereich des Gehäuses (3) im Bereich der Öffnung (6) nach innen, bevorzugt um zumindest annähernd 180°, umgebogen ist.

18. Ablage (1) nach einem der vorhergehenden Ansprüche, **dadurch gekennzeichnet, dass** die Stufen über den gesamten Umfang der Ausnehmung (2) ohne Unterbrechung umlaufend ausgebildet sind.

19. Gehäuse (3) mit einem Innenraum für die Aufnahme eines Sonnenschutzrollos (5), wobei in dem Gehäuse (3) eine Ausnehmung (2) angeordnet ist, durch die das Sonnenschutzrollo (5) beim Ausrollen hindurchgeführt werden kann, mit gegebenenfalls einer Abdeckung (9) für die Ausnehmung (2), wobei die Ausnehmung (2) zumindest teilweise von zumindest einer Seitenwand (4) begrenzt ist, **dadurch gekennzeichnet, dass** die zumindest eine Seitenwand (4), vorzugsweise vier Seitenwände (4), zwei- oder mehrstufig ausgebildet ist.

20. Gehäuse (3) nach Anspruch 19, **dadurch gekennzeichnet, dass** es elastisch verformbar ist.

21. Gehäuse (3) nach Anspruch 19 oder 20, **dadurch gekennzeichnet, dass** die Ausnehmung (2) eine Längserstreckung aufweist, die zumindest annähernd parallel zu einer Gehäuselängsachse angeordnet ist.

22. Gehäuse (3) nach einem der Ansprüche 19 bis 21, **dadurch gekennzeichnet, dass** die Ausnehmung (2) rechteckig, ellipsenförmig oder oval ist.

23. Gehäuse (3) nach einem der Ansprüche 19 bis 22, **dadurch gekennzeichnet, dass** zumindest zwei einander gegenüberliegende, die Ausnehmung (2) begrenzende Seitenwände (4) zwei- oder mehrstufig ausgebildet sind.

24. Gehäuse (3) nach einem der Ansprüche 19 bis 23, **dadurch gekennzeichnet, dass** die Seitenwände (4) mit zumindest annähernd zueinander identischen Abmessungen der Stufen ausgebildet sind.

25. Gehäuse (3) nach einem der Ansprüche 19 bis 24, **dadurch gekennzeichnet, dass** der Querschnitt der Abdeckung (9) zumindest annähernd komplementär zum Querschnitt der Seitenwand (4) bzw. Seitenwände (4) zumindest bis in den Bereich der in Einbaulage betrachtet obersten Stufe der Ausnehmung (2) ausgebildet ist.

26. Gehäuse (3) nach einem der Ansprüche 19 bis 25, **dadurch gekennzeichnet, dass** die Abdeckung (9) der Ausnehmung (2) im geschlossenen Zustand zumindest annähernd bündig mit der Oberseite des Gehäuses (3) angeordnet ist.

27. Gehäuse (3) nach einem der Ansprüche 19 bis 26, **dadurch gekennzeichnet, dass** in der zwei- oder mehrstufigen Seitenwand (4) zumindest ein Dämpfungselement für die Schließbewegung der Abdeckung (9) angeordnet ist.

28. Gehäuse (3) nach einem der Ansprüche 19 bis 27, **dadurch gekennzeichnet, dass** im Bereich der Öffnung (6) eine Verjüngung (7) angeordnet ist.

29. Gehäuse (3) nach einem der Ansprüche 19 bis 28, **dadurch gekennzeichnet, dass** die Stufen über den gesamten Umfang der Ausnehmung (2) ohne Unterbrechung umlaufend ausgebildet sind.

30. Verwendung des Gehäuses (3) nach einem der Ansprüche 19 bis 29 zur Aufbewahrung eines Sonnenschutzrollos (5) in einem Kraftfahrzeug.

31. Verwendung der Ablage (1) nach einem der Ansprüche 1 bis 18 als Hutablage mit integriertem Sonnenschutzrollo (5) in einem Kraftfahrzeug.

32. Sonnenschutzvorrichtung für Kraftfahrzeuge umfassend ein Gehäuse (3) mit einem Innenraum, in dem ein Sonnenschutzrollo (5) angeordnet ist, wobei in dem Gehäuse (3) eine Ausnehmung (2) für den Durchtritt des Sonnenschutzrollos (5) ausgebildet ist, gegebenenfalls mit einer Ablage (1), insbesondere einer Hutablage für ein Kraftfahrzeug, die eine Ausnehmung (2) aufweist, in bzw. an der das Gehäuse (3) angeordnet, insbesondere befestigt, ist, sowie mit einer Abdeckung (9) für die Ausnehmung (2) des Gehäuses (3) oder die Ausnehmung (2) der Ablage (1), wobei die Ausnehmung (2) des Gehäuses (3) oder der Ablage (1) zumindest teilweise von zumindest einer Seitenwand (4) begrenzt ist, **dadurch gekennzeichnet, dass** die zumindest eine Seitenwand (4), vorzugsweise vier Seitenwände (4), zwei- oder mehrstufig ausgebildet ist.

33. Verwendung der Sonnenschutzvorrichtung nach Anspruch 32 als Sicht- und/oder Sonnenschutz in einem Kraftfahrzeug.

## Claims

1. Shelf (1) for motor vehicles, in particular a hat shelf, with a cut-out (2) in or on which a housing (3) for a protection blind (5) can be disposed, which cut-out (2) is at least partially bounded by at least one side wall (4), **characterised in that** the at least one side wall is preferably provided in the form of four side walls (4) with two or more steps.

2. Shelf (1) as claimed in claim 1, **characterised in that** the cut-out (2) is disposed approximately perpendicular to the longitudinal axis of the motor vehicle.

3. Shelf (1) as claimed in claim 1, **characterised in that** the cut-out (2) is disposed approximately parallel with the longitudinal axis of the motor vehicle.

4. Shelf (1) as claimed in one of the preceding claims, **characterised in that** the cut-out (2) has a length which is bigger than a width, in particular is rectangular or elliptical in shape.

5. Shelf (1) as claimed in one or more of the preceding claims, **characterised in that** the cut-out (2) has at least two oppositely lying side walls (4) forming two or more steps.

6. Shelf (1) as claimed in one of the preceding claims, **characterised in that** the housing (3) has an opening (6) for removing the sun blind (5) and the cut-out (2) is of smaller dimensions than the opening (6) of the housing (3).

7. Shelf (1) as claimed in one of the preceding claims, **characterised in that** the side walls (4) are designed with at least approximately identically dimensioned steps.

8. Shelf (1) as claimed in one of the preceding claims, **characterised in that** it and/or at least one step of at least one side wall (4) is of a cambered design in the region of the cut-out (2).

9. Shelf (1) as claimed in one of the preceding claims, **characterised in that** at least one step of at least one side wall (4) has a fixing element for securing the housing (3).

10. Shelf (1) as claimed in one of the preceding claims, **characterised in that** a cover (9) is provided for the cut-out on at least one of the steps, preferably the uppermost step as viewed in the fitted position.

11. Shelf (1) as claimed in claim 10, **characterised in that** the cover (9) is of an approximately T-shaped design as viewed in cross-section.

12. Shelf (1) as claimed in claim 10 or 11, **characterised in that** the cross-section of the cover (9) at least more or less complements the cross-section of the side wall (4) or side walls (4) at least as far as the region of the uppermost step of the cut-out (2) as viewed in the fitted position.

13. Shelf (1) as claimed in one of claims 10 to 12, **characterised in that** as viewed in the fitted position, the cover (9) of the cut-out is disposed flush with a top face of the shelf (1) in the closed state.

14. Shelf (1) as claimed in one or more of the preceding claims, **characterised in that** at least one element for damping the closing movement of the cover (9) is disposed in or on at least one of the side walls (4) with two or more steps.

15. Shelf (1) as claimed in one of the preceding claims, **characterised in that** it is designed as at least part of a dashboard for a motor vehicle.

16. Shelf (1) as claimed in one of claims 1 to 14, **characterised in that** it is designed as at least part of a roof for a motor vehicle.

17. Shelf (1) as claimed in one of the preceding claims, **characterised in that** a peripheral region of the housing (3) is bent inwards in the region of the opening (6), preferably by at least approximately 180°.

18. Shelf (1) as claimed in one of the preceding claims, **characterised in that** the steps extend across the entire periphery of the cut-out (2) without interruption.

19. Housing (3) with an interior for accommodating a sun blind (5), and a cut-out (2) is provided in the housing (3) through which the sun blind (5) is able to pass when unrolled, and optionally a cover (9) for the cut-out (2), and the cut-out (2) is at least partially bounded by at least one side wall (4), **characterised in that** the at least one side wall (4) is preferably provided in the form of four side walls with two or more steps.

20. Housing (3) as claimed in claim 19, **characterised in that** it is elastically deformable.

21. Housing (3) as claimed in claim 19 or 20, **characterised in that** the cut-out (2) has a longitudinal extension disposed at least approximately parallel with a housing longitudinal axis.

22. Housing (3) as claimed in one of claims 19 to 21, **characterised in that** the cut-out (2) is rectangular, elliptical or oval.

23. Housing (3) as claimed in one of claims 19 to 22, **characterised in that** at least two side walls (4) bounding the cut-out (2) lying opposite one another have two or more steps.

24. Housing (3) as claimed in one of claims 19 to 23, **characterised in that** the side walls (4) are provided with at least approximately identically dimensioned steps.

25. Housing (3) as claimed in one of claims 19 to 24, **characterised in that** the cross-section of the cover (9) at least approximately complements the cross-section of the side wall (4) or side walls (4) at least as far as the region of the uppermost step of the cut-out (2) as viewed in the fitted position.

26. Housing (3) as claimed in one of claims 19 to 25, **characterised in that** the cover (9) of the cut-out (2) is disposed at least approximately flush with the top face of the housing (3) in the closed state.

27. Housing (3) as claimed in one of claims 19 to 26, **characterised in that** at least one element for damping the closing movement of the cover (9) is provided in the side wall (4) incorporating two or more steps.

28. Housing (3) as claimed in one of claims 19 to 27, **characterised in that** a tapered region (7) is disposed in the region of the opening (6).

29. Housing (3) as claimed in one of claims 19 to 28, **characterised in that** the steps extend across the entire periphery of the cut-out (2) without interruption.

30. Use of the housing (3) as claimed in one of claims 19 to 29 for stowing a sun blind (5) in a motor vehicle.

31. Use of the shelf (1) as claimed in one of claims 1 to 18 as a hat shelf with an integrated sun blind (5) in a motor vehicle.

32. Sun protection device for motor vehicles, comprising a housing (3) with an interior in which a sun blind (5) is disposed, and a cut-out (2) is provided in the housing (3) enabling the sun blind (5) to pass through, optionally provided with a shelf (1), in particular a hat shelf for a motor vehicle, with a cut-out (2) in or on which the housing (3) is disposed, in particular secured, and with a cover (9) for the cut-out (2) of the housing (3) or the cut-out (2) of the shelf (1), and the cut-out (2) of the housing (3) or the shelf (1) is at least partially bounded by at least one side wall (4), **characterised in that** the at least one side wall (4), is preferably provided in the form of four side walls (4) with two or more steps.

33. Use of the sun protection device as claimed in claim 32 as a visor and/or sunscreen in a motor vehicle.

## Revendications

1. Tablette de rangement (1) pour des véhicules automobiles, en particulier tablette de rangement pour chapeau, avec un évidement (2) dans lequel respectivement sur lequel peut être disposé un boîtier (3) pour un store de protection contre le soleil (5), où l'évidement (2) est délimité au moins partiellement par au moins une paroi latérale (4) **caractérisée en ce qu'**au moins une paroi latérale précitée (4), de préférence quatre parois latérales (4), est réalisée avec deux ou plusieurs gradins.

2. Tablette de rangement (1) selon la revendication 1, **caractérisée en ce que** l'évidement (2) est disposé approximativement perpendiculairement à l'axe longitudinal du véhicule automobile.

3. Tablette de rangement (1) selon la revendication 1, **caractérisée en ce que** l'évidement (2) est disposé approximativement parallèlement à l'axe longitudinal du véhicule automobile.

4. Tablette de rangement (1) selon l'une des revendications précédentes, **caractérisée en ce que** l'évidement (2) présente une longueur qui est plus grande qu'une largeur, qui est en particulier rectangulaire ou en forme d'ellipse.

5. Tablette de rangement (1) selon l'une des revendications précédentes, **caractérisée en ce que** l'évidement (2) présente au moins deux parois latérales opposées (4) qui sont réalisées avec deux ou plusieurs gradins.

6. Tablette de rangement (1) selon l'une des revendications précédentes, **caractérisée en ce que** le boîtier (3) présente une ouverture (6) pour la sortie du store de protection contre le soleil (5), ou l'évidement (2) présente des dimensions plus petites que l'ouverture (6) du boîtier (3).

7. Tablette de rangement (1) selon l'une des revendications précédentes, **caractérisée en ce que** les parois latérales (4) sont réalisées avec des dimensions au moins approximativement identiques les unes aux autres des gradins.

8. Tablette de rangement (1) selon l'une des revendications précédentes, **caractérisée en ce que** celle-ci est réalisée d'une manière bombée dans la zone de l'évidement (2) et/ou au moins un gradin d'au moins une paroi latérale (4).

9. Tablette de rangement (1) selon l'une des revendications précédentes, **caractérisé en ce qu'**au moins un gradin d'au moins une paroi latérale (4) présente un moyen de fixation pour l'accrochage du boîtier (3).

10. Tablette de rangement (1) selon l'une des revendications précédentes, **caractérisée en ce qu'**est disposé sur au moins l'un des gradins, de préférence sur le gradin supérieur considéré en position de montage, un recouvrement (9) pour l'évidement.

11. Tablette de rangement (1) selon la revendication 10, **caractérisée en ce que** le recouvrement (9), vu en section transversale, est au moins approximativement en forme de T.

12. Tablette de rangement (1) selon la revendication 10 ou 11, **caractérisée e ce que** la section transversale du recouvrement (9) est réalisée d'une manière au moins approximativement complémentaire à la section transversale de la paroi latérale (4) respectivement des parois latérales (4) au moins jusque dans la zone du gradin supérieur, considéré en position de montage, de l'évidement (2).

13. Tablette de rangement (1) selon l'une des revendications 10 à 12, **caractérisée en ce que**, considéré en position de montage, le recouvrement (9) de l'évidement, à l'état fermé, est disposé en affleurement avec un côté supérieur de la tablette de rangement (1).

14. Tablette de rangement (1) selon l'une des revendications précédentes, **caractérisée en ce qu'**il est disposé dans, respectivement à au moins une des parois latérales (4) à deux ou plusieurs gradins au moins un élément d'amortissement pour le mouvement de fermeture du recouvrement (9).

15. Tablette de rangement (1) selon l'une des revendications précédentes, **caractérisée en ce que** celle-ci est réalisée au moins partiellement comme tableau de bord d'un véhicule automobile.

16. Tablette de rangement (1) selon l'une des revendications 1 à 14, **caractérisée en ce que** celle-ci est réalisée au moins partiellement comme habillage de plafond d'un véhicule automobile.

17. Tablette de rangement (1) selon l'une des revendications précédentes, **caractérisée en ce qu'**une zone de bord du boîtier (3) est recourbée dans la zone de l'ouverture (6) vers l'intérieur, de préférence selon au moins approximativement 180°.

18. Tablette de rangement (1) selon l'une des revendications précédentes, **caractérisée en ce que** les gradins sont réalisés pour s'étendre sans interruption sur toute la périphérie de l'évidement (2).

19. Boîtier (3) avec un espace intérieur pour la réception d'un store de protection contre le soleil (5), où est ménagé dans le boîtier (3) un évidement (2) à travers lequel le store de protection contre le soleil (5), lors du déroulement, peut passer, avec le cas échéant un recouvrement (9) de l'évidement (2), de l'évidement (2) est délimité au moins partiellement par au moins une paroi latérale (4), **caractérisé en ce qu'**au moins une paroi latérale précitée (4), de préférence quatre parois latérales (4), est réalisée avec deux ou plusieurs gradins.

20. Boîtier (3) selon la revendication 19, **caractérisé en ce qu'**il est déformable élastiquement.

21. Boîtier (3) selon la revendication 19 ou 20, **caractérisé en ce que** l'évidement (2) présente une extension longitudinale qui est disposée au moins approximativement parallèlement à un axe longitudinal du boîtier.

22. Boîtier (3) selon l'une des revendications 19 à 21, **caractérisé en ce que** l'évidement (2) est rectangulaire, en forme d'ellipse ou ovale.

23. Boîtier (3) selon l'une des revendications 19 à 22, **caractérisé en ce qu'**au moins deux parois latérales (4) opposées l'une à l'autre, délimitant l'évidement (2), sont réalisées avec deux ou plusieurs gradins.

24. Boîtier (3) selon l'une des revendications 19 à 23, **caractérisé en ce que** les parois latérales (4) sont réalisées avec des dimensions au moins approximativement identiques les unes aux autres des gradins.

25. Boîtier (3) selon l'une des revendications 19 à 24, **caractérisé en ce que** la section transversale du recouvrement (9) est réalisée d'une manière au moins approximativement complémentaire à la section transversale de la paroi latérale (4), respectivement des parois latérales (4) au moins jusque dans la zone du gradin supérieur, considéré dans la position de montage, de l'évidement (2).

26. Boîtier (3) selon l'une des revendications 19 à 25, **caractérisé en ce que** le recouvrement (9) de l'évidement (2), à l'état fermé, est disposé au moins approximativement en affleurement avec le côté supérieur du boîtier (3).

27. Boîtier (3) selon l'une des revendications 19 à 26, **caractérisé en ce qu'**est disposé dans la paroi latérale (4) à deux ou plusieurs gradins au moins un élément d'amortissement du mouvement de fermeture du recouvrement (9).

28. Boîtier (3) selon l'une des revendications 19 à 27, **caractérisé en ce qu'**un rétrécissement (7) est disposé dans la zone de l'ouverture (6).

29. Boîtier (3) selon l'une des revendications 19 à 28, **caractérisé en ce que** les gradins sont réalisés pour s'étendre sans interruption sur tout le pourtour de l'évidement (2).

30. Utilisation du boitier (3) selon l'une des revendications 19 à 29 pour la conservation d'un store de protection contre le soleil (5) dans un véhicule automobile.

31. Utilisation de la tablette de rangement (1) selon l'une des revendications 1 à 18 comme tablette de rangement de chapeau avec store de protection contre le soleil intégré (5) dans un véhicule automobile.

32. Dispositif de protection contre le soleil pour des véhicules automobiles comprenant un boîtier (3) avec un espace intérieur dans lequel est disposé un store de protection contre le soleil (5), où est réalisé dans le boîtier (3) un évidement (2) pour le passage du store de protection contre le soleil (5), le cas échéant avec une tablette de rangement (1), en particulier une tablette de rangement pour chapeau pour un véhicule automobile, qui présente un évidement (2) dans, respectivement sur lequel est disposé, en particulier fixé, le boîtier (3), et avec un recouvrement (9) de l'évidement (2) du boîtier (3) ou l'évidement (2) de la tablette de rangement (1), où l'évidement du boitier (3) ou de la tablette de rangement (1) est délimité au moins partiellement par au moins une paroi latérale (4), **caractérisé en ce qu'**au moins une paroi latérale (4), de préférence quatre parois latérales (4), sont réalisées avec deux ou plusieurs gradins.

33. Utilisation du dispositif de protection contre le soleil selon la revendication 32 comme protection de la vue et/ou contre le soleil dans un véhicule automobile.
